# EUROPEAN PATENT APPLICATION

(11) **EP 4 372 679 A1**
(43) Date of publication of application: **22.05.2024**
(21) Application number: 22842188.9
(22) Date of filing: 14.07.2022
(51) Int. Cl.: G06T 7/00, G06N 20/00

(54) **RECOGNITION MODEL GENERATION METHOD AND RECOGNITION MODEL GENERATION DEVICE**

(30) Priority: 15.07.2021 JP 2021117345
(71) Applicant: Kyocera Corporation, Kyoto-shi Kyoto 612-8501 (JP); Rist Inc., Kyoto-shi, Kyoto 600-8102 (JP)
(72) Inventor: NAKAMURA Masayoshi, Kyoto-shi, Kyoto 612-8501 (JP); TSUTSUMI Masafumi, Kyoto-shi, Kyoto 612-8501 (JP); IZUMI Tomoyuki, Kyoto-shi, Kyoto 612-8501 (JP); FURUKAWA Kohei, Kyoto-shi, Kyoto 612-8501 (JP); MURAOKA Satoshi, Kyoto-shi, Kyoto 612-8501 (JP); KABASAWA Tatsumasa, Kyoto-shi, Kyoto 600-8102 (JP)
(74) Representative: TBK
(86) International application number: PCT/JP2022/027775
(87) International publication number: WO 2023/286847

(57) **Abstract**

A recognition model generation apparatus includes first recognition model generating means, providing means, and second recognition model generating means. The first recognition model generating means generates a first recognition model based on a plurality of composite images. The first recognition model outputs an object recognition result for input of an image. The providing means provides the object recognition result, yielded by input of a plurality of captured images of a detection target into the first recognition model, to the captured images as annotation data. The second recognition model generating means generates, based on the captured image and the annotation data, a second learning model.

## Description

### CROSS-REFERENCE TO RELATED APPLICATION

The present application claims priority to Japanese Patent Application No. 2021-117345 filed on July 15, 2021, the entire contents of which are incorporated herein by reference.

### TECHNICAL FIELD

The present disclosure relates to a recognition model generation method and a recognition model generation apparatus.

### BACKGROUND

Recognition by machine learning is known in image recognition to recognize a particular object from within an entire image. For example, an image recognition method to perform image recognition using a training image generated from CAD data has been proposed (see Patent Literature (PTL) 1).

### CITATION LIST

### Patent Literature

PTL 1: JP 2019-191973 A

### SUMMARY

A recognition model generation method according to a first aspect includes:
acquiring a plurality of composite images depicting a detection target;
performing a first training, based on the plurality of composite images, to create a first recognition model that outputs an object recognition result for input of an image;
acquiring a captured image of the detection target;
providing the object recognition result, outputted by input of a plurality of captured images into the first recognition model, to the captured images as annotation data; and
performing a second training to create, based on the captured image and the annotation data, a second recognition model.

A recognition model generation apparatus according to a second aspect includes:
first recognition model generating means to generate, based on a plurality of composite images depicting a detection target, a first recognition model that outputs an object recognition result for input of an image;
providing means to provide the object recognition result, yielded by input of a plurality of captured images of the detection target into the first recognition model, to the captured images as annotation data; and
second recognition model generating means to generate, based on the captured image and the annotation data, a second recognition model.

A recognition model generation apparatus according to a third aspect is a recognition model generation apparatus for generating a second recognition model by training a first recognition model using captured images of a detection target as teacher data, wherein
the first recognition model is a recognition model generated by training an original recognition model used for object recognition, using composite images generated based on 3D shape data of the detection target as teacher data.

### BRIEF DESCRIPTION OF THE DRAWINGS

In the accompanying drawings:
FIG. 1 is a functional block diagram illustrating a schematic configuration of a recognition model generation apparatus according to an embodiment.
FIG. 2 is a functional block diagram illustrating a virtual schematic configuration of the controller in FIG. 1;
FIG. 3 is a first flowchart illustrating a recognition model generation process executed by the controller in FIG. 1; and
FIG. 4 is a second flowchart illustrating a recognition model generation process executed by the controller in FIG. 1.

### DETAILED DESCRIPTION

To improve recognition accuracy by machine learning, it is necessary to train with a large amount of teacher data. A large amount of teacher data requires, for example, images of the same object to be recognized as viewed from various directions and under various lighting conditions. A known method for preparing such a large amount of teacher data for the same object to be recognized is to generate training images from CAD data of the object. In a recognition model trained using only training images generated from CAD data, it is difficult to recognize actual captured images accurately.

An embodiment of a recognition model generation apparatus to which the present disclosure is applied is now described with reference to the drawings. A recognition model generation method is described by way of the description of the recognition model generation apparatus.

The recognition model generation apparatus creates a first recognition model by training an original recognition model using composite images based on 3D shape data of a detection target. The recognition model generation apparatus provides annotation information by annotating at least a portion of the captured images of the detection target using the first recognition model. The recognition model generation apparatus creates a model for deployment via the second recognition model by training the first recognition model. The recognition model generation apparatus uses the captured images of the detection target to which annotation data is provided to create the model for deployment.

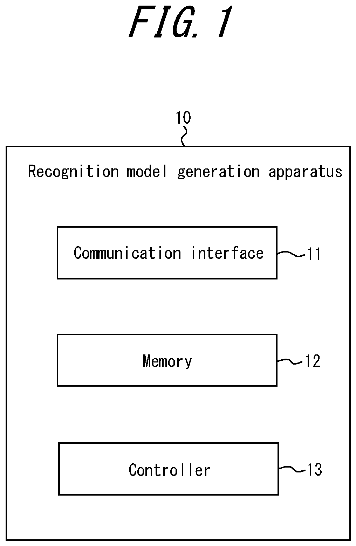

As illustrated in FIG. 1, a recognition model generation apparatus 10 according to an embodiment may be configured to include a communication interface 11, a memory 12, and a controller 13. The recognition model generation apparatus 10 may, for example, be one or more server apparatuses that can communicate with each other, a general purpose electronic device such as a PC (Personal Computer), or a dedicated electronic device.

The communication interface 11 may communicate with external devices. The external devices are, for example, an imaging apparatus, a storage medium, and a terminal apparatus. The imaging apparatus is, for example, provided in a portable terminal such as a smartphone or tablet, or in an apparatus such as a robot. The storage medium is, for example, any storage medium that can be attached or detached through a connector. The terminal apparatus is, for example, a general purpose electronic device such as a smartphone, tablet, or PC, or is a dedicated electronic device. The communication interface 11 may communicate with external devices in a wired or wireless manner.

The communication interface 11 may acquire information and instructions through communication with an external device. The communication interface 11 may provide information and instructions through communication with an external device.

The communication interface 11 may acquire 3D shape data of a detection target. The 3D shape data is, for example, CAD data. The 3D shape data may have the name of the detection target associated with it as label data.

The communication interface 11 may acquire texture information for the detection target. As texture data, a texture of a material commonly used for the assumed detection target may be converted to data as a template, or a real photographic surface may be converted to data.

The communication interface 11 may acquire a composite image generated based on 3D shape data of the detection target. The acquired composite image may have associated annotation data. The annotation data may, for example, include data corresponding to at least one of a mask image of the detection target, a bounding box of the detection target, and a label. The mask image is, for example, an image that fills the area inside the outline of the detection target within the entire image range. The bounding box is, for example, a rectangular frame surrounding the detection target. The label is, for example, the name of the detection target. The composite image may be generated based on, for example, a plurality of sets of 2D shape data.

The communication interface 11 may acquire a captured image of the detection target. The communication interface 11 may acquire modified annotation data for the annotation data provided to the captured image, as described below.

The communication interface 11 may provide an imaging guide, for capturing an image of the detection target, to a mobile terminal or a robot, as described below. The communication interface 11 may provide annotation information obtained using the first recognition model on the acquired captured image to a terminal apparatus, as described below.

The memory 12 includes any storage device, such as random access memory (RAM) or read only memory (ROM). The memory 12 may store various programs that cause the controller 13 to function and various information used by the controller 13.

The controller 13 includes one or more processors and a memory. The term "processor" encompasses general purpose processors that execute particular functions by reading particular programs and dedicated processors that are specialized for particular processing. The dedicated processor may include an application specific integrated circuit (ASIC). The processor may include a programmable logic device (PLD). The PLD may include a field-programmable gate array (FPGA). The controller 13 may be either a System-on-a-Chip (SoC) or a System-in-a-Package (SiP) with one processor or a plurality of processors that work together.

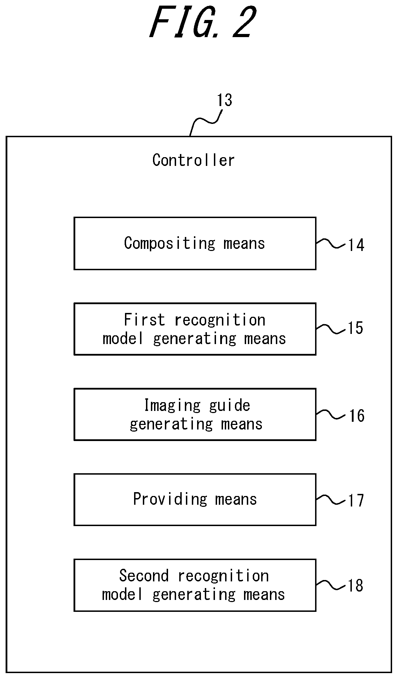

As illustrated in FIG. 2, the controller 13 may function as compositing means 14, first recognition model generating means 15, imaging guide generating means 16, providing means 17, and second recognition model generating means 18, as described below.

In a case in which the compositing means 14 acquires 3D shape data of the detection target via the communication interface 11, the compositing means 14 may generate a composite image of the detection target based on the 3D shape data. The compositing means 14 may generate, based on the 3D shape data, a two-dimensional composite image including a single image or a plurality of images of the detection target in an image display area, such as a rectangle. The compositing means 14 may generate a plurality of composite images. The compositing means 14 may generate a composite image in which the image of the detection target is arranged in various ways in the image display area. The compositing means 14 may generate composite images containing images of different detection targets separately. The compositing means 14 may generate a composite image containing different detection targets. The compositing means 14 may generate the composite image so as to have the form of input information to be inputted during inference of the first recognition model, as described below. For example, if the captured image to be inputted to the first recognition model is 2D, the composite image may also be 2D.

The compositing means 14 may generate a composite image including images of various postures of the detection target in the image display area. The compositing means 14 may determine the posture of the image based on the 3D shape data of the detection target. For example, in a case in which the detection target is spherical, the compositing means 14 generates a composite image with the image viewed from any one direction as the posture of the detection target. For example, in a case in which the detection target is cubic, the compositing means 14 may generate composite images that are angular images viewed from any direction, with the cube inclined 45° taking any side of any face as an axis and then rotated 10° at a time about a side perpendicular to that side. Furthermore, the compositing means 14 may generate composite images that are angular images viewed from any direction, with the cube inclined 50° taking any side of any face as an axis and then rotated 10° at a time about a side perpendicular to that side.

In a case in which a plurality of composite images is generated for the same detection target, the compositing means 14 may determine to use a portion of the composite images as data for training and the remainer as data for evaluation. For example, in a case in which composite images of a cubic detection target are generated as described above, a composite image viewed from a direction such that the cube is inclined 45°, taking any side of any face as an axis, may be determined to be data for training. A composite image viewed from a direction such that the cube is inclined 50°, taking any side of any face as an axis, may be determined to be data for evaluation. Furthermore, the data for training may be determined to be training data or validation data.

The compositing means 14 may generate a composite image using a texture corresponding to the detection target. The texture corresponding to the detection target may be selected by specifying a template registered in advance for each type of material, such as metal, and stored in the memory 12, or by specifying an image of the material. The image of the material may be an image of a texture corresponding to a material identified based on an overall image generated by a camera or other imaging means capturing an image of the detection target. The image of the material may be stored in advance in the memory 12. Selection of the texture may be performed by detecting manual input to a pointing device such as a mouse, to a keyboard, or to another input device via the communication interface 11.

In a case in which the compositing means 14 acquires a command to create a composite image from the providing means 17, as described below, the compositing means 14 may generate the composite image so as to reproduce the features of the captured image based on the 3D shape data. In other words, the compositing means 14 may generate the composite image to have identical features as the captured image. The identical features are, for example, the same posture, i.e., the same appearance, and the same colors, i.e., the same hue, saturation, and brightness, as the detection target in the captured image. The compositing means 14 may store the newly generated composite image in the memory 12 as data for creating a model for deployment, as described below.

The compositing means 14 may perform annotation on the composite image based on the 3D shape data. Annotation refers to providing annotation data to the composite image. In other words, the compositing means 14 may provide annotation data to the composite image by performing annotation. The annotation data that the compositing means 14 provides by annotation may, for example, include a mask image of the detection target and a bounding box of the detection target. The compositing means 14 may generate a mask image by generating a polygon based on the 3D shape data and calculating the area occupied by the detection target viewed from the imaging direction of the composite image, and may generate a bounding box surrounding the polygon. The compositing means 14 may store the composite image provided with annotation data in the memory 12 as data for creating a model for deployment.

The first recognition model generating means 15 performs first training to train the original recognition model using the composite images as teacher data. The original recognition model is a recognition model used for object recognition. The original recognition model is a model that detects the area of each object by at least one of a mask image and a rectangular bounding box in order to perform object detection such as instance segmentation, for example. The original recognition model may be a model trained using, for example, a large dataset such as ImageNet or MS COCO, or a dataset of a specific product group such as industrial products. The first training is, for example, transfer learning and Fine Tuning of the original recognition model. The first recognition model generating means 15 generates a first recognition model by the first training. The first recognition model outputs an object recognition result for any inputted image. The object recognition result may be data corresponding to at least one of a mask image of the detection target, a bounding box of the detection target, a label, a mask score, and a bounding box score.

The first recognition model generating means 15 may calculate the accuracy against the validation data for each epoch during training using the training data. The first recognition model generating means 15 may attenuate the learning rate in a case in which there is no increase in accuracy against the validation data for a certain number of epochs. Furthermore, the first recognition model generating means 15 may terminate the training in a case in which there is no increase in accuracy against the validation data for a certain number of epochs.

The first recognition model generating means 15 may store the model of the epoch with the best accuracy for the validation data in the memory 12 as the first recognition model. The first recognition model generating means 15 may search for a degree of confidence threshold that yields the best accuracy for the validation data while changing the degree of confidence threshold. The first recognition model generating means 15 may determine the resulting degree of confidence threshold as the degree of confidence threshold of the first recognition model. The first recognition model generating means 15 may evaluate the first recognition model using the evaluation data.

The imaging guide generating means 16 may provide an imaging guide based on the acquired 3D shape data. The imaging guide may indicate a method of imaging the detection target corresponding to the acquired 3D shape data. The imaging guide may, for example, include a specification of the imaging direction for the detection target, i.e., how the detection target is to appear in the captured image generated by imaging. The imaging guide may, for example, include a specification of the size of the image of the detection target in the entire captured image, i.e., the focal length, the distance between the detection target and the camera, and the like. The imaging guide generating means 16 may determine the imaging direction of the detection target and the image size based on 3D shape data.

The imaging guide may be transmitted to a portable terminal with an imaging apparatus, such as a smartphone or tablet, or to a control apparatus of a robot to which an imaging apparatus is attached. The imaging apparatus may capture an image by control based on the imaging guide and acquire a captured image of the detection target.

The imaging guide may be an imaging method indicated by text and drawings in the configuration transmitted to the portable terminal. The detection target may be captured by manual operation of the user with reference to the imaging guide. In a configuration in which the imaging guide is transmitted to the control apparatus of a robot, the imaging guide may be a control command that causes the robot to adjust the position of the imaging apparatus to match a designated imaging direction and size. The detection target may be imaged at the position adjusted by the robot based on the imaging guide.

The controller 13 may acquire the captured image via the communication interface 11. When acquiring the captured image, the controller 13 may present, in a selectable manner, names of the detection targets corresponding to the acquired 3D shape data. The controller 13 may present the names of the detection targets, for example, on a display connected to the recognition model generation apparatus 10 or a terminal apparatus. The controller 13 may acquire the name corresponding to the captured image from an input device connected to the recognition model generation apparatus 10 or by operation input from a terminal apparatus. The controller 13 may associate the name of the detection target as a label with the acquired captured image.

The providing means 17 performs annotation on at least a portion of the acquired captured images using the first recognition model, thereby providing annotation data to the captured images. The annotation data may include data corresponding to at least one of a mask image of the detection target and a bounding box of the detection target. The providing means 17 may store the captured image to which annotation data is assigned in the memory 12 as data for creating a model for deployment.

The providing means 17 may generate a removed image by performing noise removal on the captured image to be annotated. The providing means 17 may perform annotation by having the first recognition model recognize the removed image and may provide annotation data to the captured image corresponding to the removed image. Therefore, the generated removed image is not used in the second recognition model generating means 18 described below, and the second training is performed using the captured image to which the annotation data is assigned.

The providing means 17 may present the captured image provided with annotation data to a display connected to the recognition model generation apparatus 10 or to a terminal apparatus connected via the communication interface 11. The annotation data may be modifiable by operation input provided to an input device connected to the recognition model generation apparatus 10 or provided to the terminal apparatus. The providing means 17 may acquire the modified annotation data via the communication interface 11. The providing means 17 may use the modified annotation data to update the annotation data stored in the memory 12 as data for creating a model for deployment.

In a case in which the degree of confidence in annotation of the captured image, i.e., the degree of confidence when the captured image is recognized by the first recognition model to annotate the captured image, is equal to or less than a threshold value, the providing means 17 may provide a command to the compositing means 14 to create a composite image with the features of the captured image.

The second recognition model generating means 18 performs second training to train the first recognition model using the captured images. The second recognition model generating means 18 generates a second recognition model by the second training. The second recognition model outputs an object recognition result for any inputted image. The object recognition result may be data corresponding to at least one of a mask image of the detection target, a bounding box of the detection target, a label, a mask score, and a bounding box score.

The second recognition model generating means 18 may generate the second recognition model by performing the second training using, as teacher data, the captured images to which annotation data is provided. The second recognition model generating means 18 may perform the second training using the composite images to which the annotation data is provided and which are stored in the memory 12 as data for creating a model for deployment.

In the configuration in which the second recognition model generating means 18 performs the second training using the captured images to which annotation data is provided, at least a portion of the captured images to which annotation data is provided, and which are stored in the memory 12 as data for creating a model for deployment, is determined to be the data for training. Furthermore, the second recognition model generating means 18 may determine the data for training to be training data or validation data. The second recognition model generating means 18 may determine another portion of the captured images to which the annotation data is provided to be data for evaluation.

The second recognition model generating means 18 may calculate the accuracy against the validation data for each epoch during training using the training data. The second recognition model generating means 18 may attenuate the learning rate in a case in which there is no increase in accuracy against the validation data for a certain number of epochs. Furthermore, the second recognition model generating means 18 may terminate the training in a case in which there is no increase in accuracy against the validation data for a certain number of epochs.

The second recognition model generating means 18 may store the model of the epoch with the best accuracy for the validation data in the memory 12 as the second recognition model. The second recognition model generating means 18 may search for a degree of confidence threshold that yields the best accuracy for the validation data while changing the degree of confidence threshold. The second recognition model generating means 18 may determine the resulting degree of confidence threshold as the degree of confidence threshold of the second recognition model. The second recognition model generating means 18 may evaluate the second recognition model using the evaluation data.

The second recognition model generating means 18 may generate the second recognition model by retraining the first recognition model, as the second training, by performing domain adaptation using the captured images to which annotation data is not provided.

In the configuration in which the second recognition model generating means 18 performs the second training using the captured images to which annotation data is not provided, at least a portion of the captured images to which annotation data is provided, and which are stored in the memory 12 as data for creating a model for deployment, is determined to be the data for evaluation. The second recognition model generating means 18 may evaluate the second recognition model using the evaluation data.

The second recognition model generating means 18 may store the second recognition model after evaluation in the memory 12 as a model for deployment.

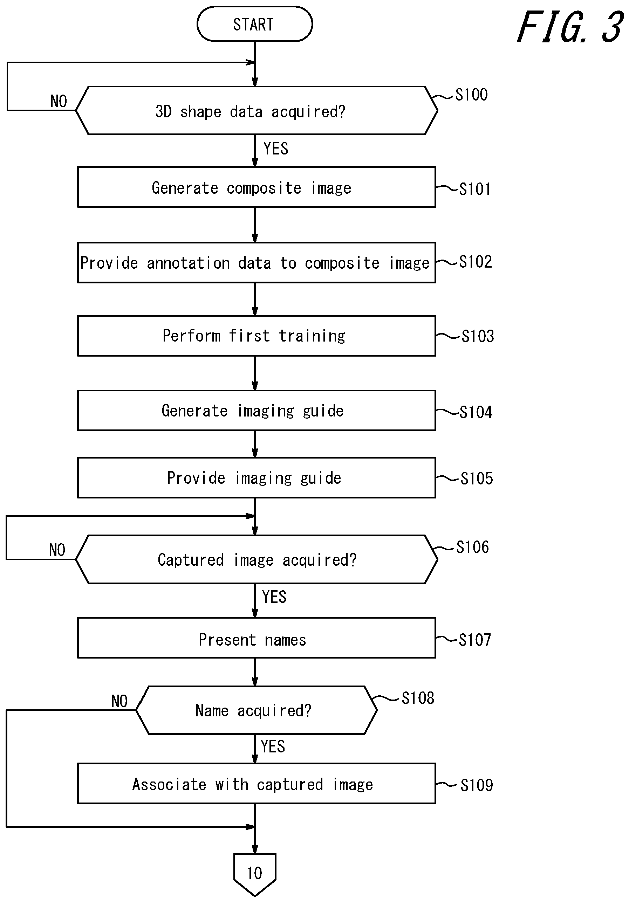

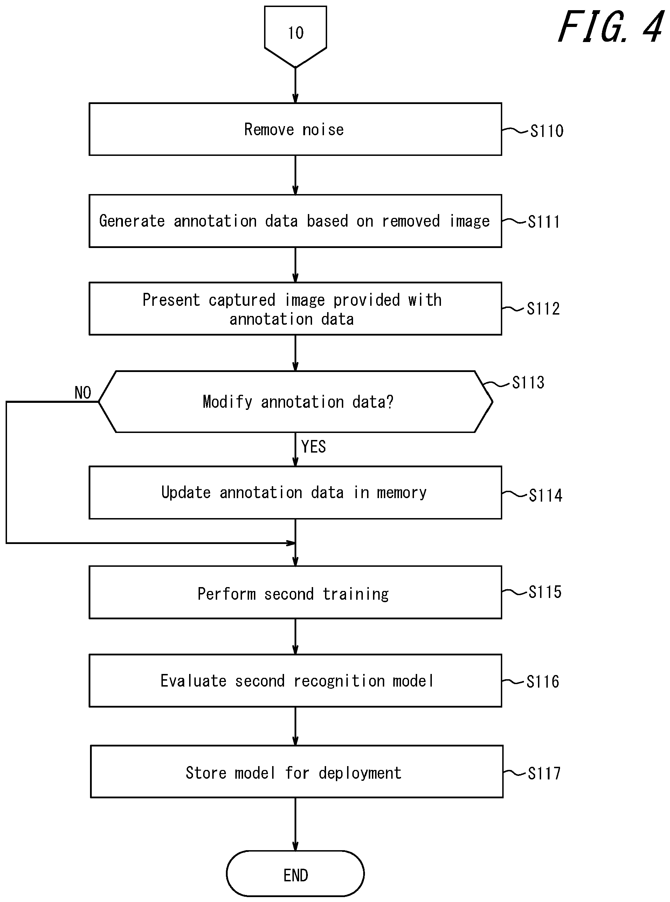

Next, the recognition model generation process executed by the controller 13 in the present embodiment is described with reference to the flowcharts in FIGS. 3 and 4. The recognition model generation process starts in the case, for example, of detecting input of an operation input to start the generation process to an input device or the like connected to the recognition model generation apparatus 10.

In step S100, the controller 13 determines whether the 3D shape data to be detected has been acquired. If the 3D shape data has not been acquired, the process returns to step S100. If it has been acquired, the process proceeds to step S101.

In step S101, the controller 13 generates a composite image based on the 3D shape data whose acquisition was confirmed in step S100. After generation, the process proceeds to step S102.

In step S102, the controller 13 generates annotation data based on the 3D shape data whose acquisition was confirmed in step S100. The controller 13 provides the generated annotation data to the composite image generated in step S101. After provision, the process proceeds to step S103.

In step S103, the controller 13 performs the first training by training the original recognition model using the composite image to which the annotation data was provided in step S102. The controller 13 stores the first recognition model generated by the performance of the first training in the memory 12. After the first training is performed, the process proceeds to step S104.

In step S104, the controller 13 may generate an imaging guide based on the 3D shape data whose acquisition was confirmed in step 5100. The controller 13 may generate the imaging guide according to the recipient of the imaging guide. After generation, the process proceeds to step S105.

In step S105, the controller 13 provides the imaging guide generated in step S104 to an external device. After provision, the process proceeds to step S106.

In step S106, the controller 13 determines whether a captured image has been acquired from an external device. If no captured image has been acquired, the process returns to step S106. If a captured image has been acquired, the process proceeds to step S107.

In step S107, the controller 13 presents, in a selectable manner, names of the detection targets corresponding to the 3D shape data stored in the memory 12. After presentation, the process proceeds to step S108.

In step S108, the controller 13 determines whether the name of the detection target has been acquired. If the name of the detection target has been acquired, the process proceeds to step S109. If the name of the detection target has not been acquired, the process proceeds to step S110.

In step S109, the controller 13 associates the name whose acquisition was confirmed in step S108 with the captured image whose acquisition was confirmed in step S106. The controller 13 stores the captured image, with which the name of the detection target was associated, in the memory 12. After association, the process proceeds to step S110.

In step S110, the controller 13 removes noise from the captured image whose acquisition was confirmed in step S106 to generate a removed image. After noise removal, the process proceeds to step S111.

In step S111, the controller 13 performs annotation on the removed image generated in step S110 using the first recognition model generated in step S103. The controller 13 provides the annotation data generated by the annotation to the captured image corresponding to the removed image. After provision, the process proceeds to step S112.

In step S112, the controller 13 presents the captured image provided with annotation data. After presentation, the process proceeds to step S113.

In step S113, the controller 13 determines whether modified annotation data has been acquired with respect to the presentation of the captured image provided with annotation data. If modified annotation data has been acquired, the process proceeds to step S114. If modified annotation data has not been acquired, the process proceeds to step S115.

In step S114, the controller 13 updates the annotation data stored in the memory 12 using the modified annotation data whose acquisition was confirmed in step S113. After updating, the process proceeds to step S115.

In step S115, the controller 13 generates the second recognition model by performing the second training. In a configuration in which the captured images provided with annotation data are used in the second training, the controller 13 generates a composite image with the same features as a captured image for which the degree of confidence in the annotation is equal to or less than a threshold. The controller 13 further trains the first recognition model using the captured images provided with annotation data and the newly generated composite images. Alternatively, in a configuration in which captured images not provided with annotation data are used in the second training, the controller 13 performs domain adaptation using the captured images. After the second training is performed, the process proceeds to step S116.

In step S116, the controller 13 evaluates the second recognition model generated in step S116 using the captured images provided with annotation data. After evaluation, the process proceeds to step S117.

In step S117, the controller 13 stores the second recognition model evaluated in step S116 in the memory 12 as a model for deployment. After storage, the recognition model generation process ends.

The recognition model generation apparatus 10 of the present embodiment with the above-described configuration generates a first recognition model that outputs an object recognition result for input of an image based on a plurality of composite images depicting a detection target, inputs a plurality of captured images of the detection target to the first recognition model and uses the object recognition result as annotation data provided to the captured images, and creates a second learning model based on the captured images and the annotation data. With this configuration, annotation of the captured images is performed by the first recognition model, enabling the recognition model generation apparatus 10 to reduce the work to annotate the captured images for training the detection target recognition model that uses composite images and captured images.

The recognition model generation apparatus 10 also creates the second learning model as described above and can thereby improve the recognition accuracy of the detection target in actual captured images. In addition, the recognition model generation apparatus 10 can perform training using a large number of composite images generated based on 3D shape data and can thereby generate a model with high recognition accuracy even for a small number of captured images.

In a case in which the actual item that is the detection target is manufactured on a production line, the actual item is manufactured using 3D shape data. The 3D shape data of the detection target is therefore generated prior to the preparation of the captured images of the detection target, allowing the composite images to be obtained before the captured images. In the recognition model generation method of the present embodiment with the above-described configuration, the first recognition model can be created by training the original recognition model using the composite images by the time the actual item that is the detection target is manufactured and the captured images become available. Subsequently, after the actual item that is the detection target is manufactured and the captured images become available, the second learning model can be created by providing annotation data to at least a portion of the captured images with use of the first recognition model and training the first recognition model using the captured images of the detection target. This enables the recognition model generation method of the present embodiment to proceed in parallel with the construction of the manufacturing line and the generation of the recognition model, thereby achieving a manufacturing line in which recognition model generation is introduced at an early stage.

In the recognition model generation apparatus 10 of the present embodiment, the second recognition model is generated in the second training using the captured images provided with annotation data. With this configuration, the recognition model generation apparatus 10 can reduce the time required for the second training.

In the recognition model generation apparatus 10 of the present embodiment, during the second training, the first recognition model is retrained by performing domain adaptation using the captured images of the detection target not provided with annotation data, and the captured images provided with annotation data are used to evaluate the second recognition model. With this configuration, the recognition model generation apparatus 10 can improve the reliability of the evaluation results, since the trained recognition model is evaluated using captured images instead of composite images.

In a case in which the degree of confidence in annotation of the captured image, i.e., the degree of confidence when the captured image is recognized by the first recognition model for annotation, is equal to or less than a threshold value, the recognition model generation apparatus 10 of the present embodiment generates a composite image of the detection target to have identical features as the captured image and uses the composite image in the second training. With this configuration, the recognition model generation apparatus 10 can improve the recognition accuracy of the ultimately trained second recognition model, since composite images that look similar to an appearance that decreases recognition accuracy can be generated in many ways. By using the captured images while ensuring robustness in the domain of the composite images, the above-described configuration also enables the recognition model generation apparatus 10 to improve the recognition accuracy of the detection target in images that are actually captured.

The recognition model generation apparatus 10 of the present embodiment provides an imaging guide based on the 3D shape data. With this configuration, the recognition model generation apparatus 10 enables capturing of images based on the imaging guide. Therefore, based on the 3D shape data, the recognition model generation apparatus 10 can acquire captured images yielded by imaging the detection target in postures that greatly need to be trained, regardless of the user's experience and knowledge. As a result, the recognition model generation apparatus 10 can ultimately generate a second recognition model with high recognition accuracy.

The recognition model generation apparatus 10 of the present embodiment provides annotation data by having the first recognition model recognize the removed images yielded by performing noise removal on the captured images during annotation, and the first recognition model is trained using the captured images during the second training. With this configuration, the recognition model generation apparatus 10 can provide highly accurate annotation data by making the captured images closer to composite images with little noise during the annotation. Furthermore, since training is performed using captured images not subjected to noise removal during the second training, the recognition model generation apparatus 10 can improve the recognition accuracy of the detection target in images that are actually captured.

The recognition model generation apparatus 10 of the present embodiment also generates composite images using a texture. With this configuration, the recognition model generation apparatus 10 can further improve the recognition accuracy of the first recognition model and the second recognition model.

An embodiment of the recognition model generation apparatus 10 has been described above, but embodiments of the present disclosure can include a method or program for implementing the apparatus, as well as a storage medium on which the program is recorded (examples include an optical disk, an optical-magnetic disk, a CD-ROM, a CD-RW, a magnetic tape, a hard disk, and a memory card).

The embodiment of the program is not limited to an application program such as object code compiled by a compiler or program code executed by an interpreter, but may also be in the form of a program module or the like that is incorporated into an operating system. Furthermore, the program may or may not be configured so that all processing is performed only by the CPU on the control board. The program may be configured to be implemented in whole or in part by another processing unit mounted on an expansion board or expansion unit added to the control board as needed.

The drawings illustrating embodiments according to the present disclosure are merely schematic. The dimensional ratios and the like in the drawings do not necessarily match the actual dimensions.

Although embodiments of the present disclosure have been described through drawings and examples, it is to be noted that various changes and modifications may be made by those skilled in the art on the basis of the present disclosure. Therefore, such changes and modifications are to be understood as included within the scope of the present disclosure. For example, the functions and the like included in the various components may be reordered in any logically consistent way. Furthermore, components may be combined into one or divided.

All of the constituent elements described in the present disclosure and/or all of the disclosed methods, or all of the steps of the process, may be combined in any way, except combinations in which features are mutually exclusive. Also, each of the features described in this disclosure can be replaced by alternative features that function for the same, equivalent, or similar purposes, unless expressly denied. Therefore, unless expressly denied, each of the disclosed features is only one example of a comprehensive set of identical or equivalent features.

Furthermore, embodiments according to the present disclosure are not limited to any of the specific configurations of the embodiments described above. Embodiments according to the present disclosure can be extended to all of the novel features or combinations thereof described in the present disclosure, or all of the novel methods, processing steps, or combinations thereof described in the present disclosure.

The references to "first", "second", and the like in the present disclosure are identifiers for distinguishing between the corresponding elements. The numbers attached to elements distinguished by references to "first", "second", and the like in the present disclosure may be switched. For example, the identifiers "first" and "second" of the first recognition model and the second recognition model may be switched. Identifiers are switched simultaneously, and the elements are still distinguished between after identifiers are switched. The identifiers may be removed. Elements from which the identifiers are removed are distinguished by their reference sign. Identifiers in the present disclosure, such as "first" and "second", may not be used in isolation as an interpretation of the order of elements or as the basis for the existence of the identifier with a lower number.

In the present disclosure, the compositing means 14, the first recognition model generating means 15, the imaging guide generating means 16, the providing means 17, and the second recognition model generating means 18 have been described as functioning by way of the controller 13, but this configuration is not limiting. The compositing means 14, the first recognition model generating means 15, the imaging guide generating means 16, the providing means 17, and the second recognition model generating means 18 may each be configured by one or more apparatuses. In this case, the recognition model generation method disclosed in the present embodiment may, for example, be implemented in a recognition model generation system that includes a compositing apparatus, a first recognition model generation apparatus, an imaging guide generation apparatus, a providing apparatus that provides annotation data, and a second recognition model generation apparatus.

### REFERENCE SIGNS LIST

- 10: Recognition model generation apparatus
- 11: Communication interface
- 12: Memory
- 13: Controller
- 14: Compositing means
- 15: First recognition model generating means
- 16: Imaging guide generating means
- 17: Providing means
- 18: Second recognition model generating means

## Claims

1. A recognition model generation method comprising:
acquiring a plurality of composite images depicting a detection target;
performing a first training, based on the plurality of composite images, to create a first recognition model that outputs an object recognition result for input of an image;
acquiring a captured image of the detection target;
providing the object recognition result, outputted by input of a plurality of captured images into the first recognition model, to the captured images as annotation data; and
performing a second training to create, based on the captured image and the annotation data, a second recognition model.

2. The recognition model generation method according to claim 1, wherein in the second training, the first recognition model is retrained.

3. The recognition model generation method according to claim 1 or 2, wherein the second training is performed with a plurality of captured images fewer in number than the plurality of composite images used during the first training.

4. The recognition model generation method according to any one of claims 1 to 3, wherein the composite images are generated based on 3D shape data of the detection target.

5. The recognition model generation method according to any one of claims 1 to 4, wherein in the second training, the second recognition model is generated using the captured image to which the annotation data is provided.

6. The recognition model generation method according to any one of claims 1 to 4, wherein
in the second training, the first recognition model is retrained by performing domain adaptation using a captured image of the detection target to which annotation data has not been provided, and
the captured image to which the annotation data is provided is used to evaluate the second recognition model.

7. The recognition model generation method according to any one of claims 1 to 6, wherein
in a case in which a degree of confidence in annotation of the captured image is equal to or less than a threshold, a composite image of the detection target is generated so as to have an identical feature as the captured image, and
the composite image is used in the second training.

8. The recognition model generation method according to any one of claims 1 to 7, wherein the captured image is captured based on an imaging guide for capturing the captured image, the imaging guide being provided based on the 3D shape data.

9. The recognition model generation method according to claim 8, wherein the captured image is captured by controlling, based on the imaging guide, a robot having attached thereto an imaging apparatus that acquires captured images of the detection target.

10. The recognition model generation method according to claim 8, wherein the imaging guide includes an imaging direction of the detection target as determined based on the 3D shape data.

11. The recognition model generation method according to any one of claims 1 to 9, wherein
in the annotation, the annotation data is provided by having the first recognition model recognize a removed image yielded by removing noise from the captured image, and
in the second training, the first recognition model is trained using the captured image.

12. The recognition model generation method according to any one of claims 1 to 10, wherein the composite image is generated using a texture corresponding to a material of the detection target identified based on an image of the detection target captured by imaging means, or a texture selected from a template corresponding to any material.

13. The recognition model generation method according to any one of claims 1 to 11, wherein the annotation data is at least one of a mask image of the detection target and a bounding box surrounding the detection target in the captured image that is acquired.

14. A recognition model generation apparatus comprising:
first recognition model generating means to generate, based on a plurality of composite images depicting a detection target, a first recognition model that outputs an object recognition result for input of an image;
providing means to provide the object recognition result, yielded by input of a plurality of captured images of the detection target into the first recognition model, to the captured images as annotation data; and
second recognition model generating means to generate, based on the captured image and the annotation data, a second recognition model.

15. A recognition model generation apparatus for generating a second recognition model by training a first recognition model using captured images of a detection target as teacher data, wherein
the first recognition model is a recognition model generated by training an original recognition model used for object recognition, using composite images generated based on 3D shape data of the detection target as teacher data.
